# EUROPEAN PATENT APPLICATION

(11) **EP 2 927 637 A1**
(43) Date of publication of application: **07.10.2015**
(21) Application number: 14163002.0
(22) Date of filing: 01.04.2014
(51) Int. Cl.: G01C 21/00, G01C 21/36, G06F 17/30, G06F 3/0484, G09B 29/10, H04W 4/02

(54) **Association between a point of interest and an obejct**

(71) Applicant: Nokia Technologies OY, 02610 Espoo (FI)
(72) Inventor: Eronen, Antti, 33820 Tampere (FI); Lehtiniemi, Arto, 33880 Lempäälä (FI); Leppänen, Jussi, 33580 Tampere (FI); Holm, Jukka, 33270 Tampere (FI)
(74) Representative: Nokia Corporation

(57) **Abstract**

A method comprising receiving visual information, identifying at least one object represented by the visual information, determining that the object is associated with a point of interest, the object being absent an indication of the point of interest, and causing display of map information that comprises a representation of the point of interest based, at least in part, on the determination that the object is associated with the point of interest is disclosed.

## Description

### TECHNICAL FIELD

The technical field relates generally to an association between a point of interest and an object.

### BACKGROUND

As electronic apparatuses become increasingly prevalent in our society, many users have become increasingly dependent on their electronic apparatus in daily life. For example, a user may desire to utilize map information by way of the user's electronic apparatus. As such, it may be desirable to configure an electronic apparatus such that a user of the electronic apparatus may utilize map information in an intuitive and simple manner.

### SUMMARY

Various aspects of examples of the invention are set out in the claims.

One or more embodiments may provide an apparatus, a computer readable medium, a non-transitory computer readable medium, a computer program product, and/or a method for receiving visual information, identifying at least one object represented by the visual information, determining that the object is associated with a point of interest, the object being absent an indication of the point of interest, and causing display of map information that comprises a representation of the point of interest based, at least in part, on the determination that the object is associated with the point of interest.

One or more embodiments may provide an apparatus, a computer readable medium, a computer program product, and/or a non-transitory computer readable medium having means for receiving visual information, means for identifying at least one object represented by the visual information, means for determining that the object is associated with a point of interest, the object being absent an indication of the point of interest, and means for causing display of map information that comprises a representation of the point of interest based, at least in part, on the determination that the object is associated with the point of interest.

An apparatus comprising at least one processor and at least one memory, the memory comprising machine-readable instructions, that when executed cause the apparatus to perform receipt of visual information, identification of at least one object represented by the visual information, determination that the object is associated with a point of interest, the object being absent an indication of the point of interest, and causation of display of map information that comprises a representation of the point of interest based, at least in part, on the determination that the object is associated with the point of interest.

In at least one example embodiment, the determination that the object is associated with the point of interest excludes identification of a visual characteristic of the object that indicates the point of interest.

In at least one example embodiment, the visual characteristic is at least one of text information, image information, or map information.

In at least one example embodiment, the visual characteristic is indicative of at least one of identity of the point of interest, appearance of the point of interest, a physical characteristic of the point of interest, or location of the point of interest.

One or more example embodiments further perform receipt of different visual information, identification of at least one object represented by the different visual information, identification of a point of interest, and establishment of an association between the point of interest and the object, wherein the receipt of different visual information, the identification of the object, the identification of the point of interest, and the establishment of the association between the point of interest and the object are performed prior to the receipt of the visual information.

One or more example embodiments further perform sending of information indicative of the association between the object and the point of interest to a separate apparatus.

In at least one example embodiment, the identification of the object comprises causation of display of the different visual information, and receipt of information indicative of an object identification input that identifies a portion of the different visual information that comprises a representation of the object, wherein the identification of the object represented on the different visual information is based, at least in part, on the object identification input.

One or more example embodiments further perform receipt of different visual information, identification of at least one object represented by the different visual information, identification of a point of interest type, and establishment of an association between the point of interest type and the object, wherein the receipt of different visual information, the identification of the object, the identification of the point of interest, and the establishment of the association between the point of interest and the object are performed prior to the receipt of the visual information.

One or more example embodiments further perform sending of information indicative of the association between the object and the point of interest type to a separate apparatus.

One or more example embodiments further perform determination of a route that includes the point of interest, wherein causation of display of the map information comprises a representation of the route.

In at least one example embodiment, determination of the route comprises determination of a route between the point of interest and a current location of an apparatus.

In at least one example embodiment, the route is from the current location of the apparatus to the point of interest.

In at least one example embodiment, the route is from the point of interest to the current location of the apparatus.

One or more example embodiments further perform receipt of information indicative of a route change input, determination of a different route based, at least in part, on the route change input, and causation of display of a representation of the different route.

One or more example embodiments further perform termination of display of the representation of the route.

In at least one example embodiment, the different route includes the point of interest and the current location of the apparatus.

In at least one example embodiment, the route change input corresponds with shaking of the object.

In at least one example embodiment, the route change input corresponds with a movement of the object in a movement direction, and determination of the different route is based, at least in part, on the movement direction.

In at least one example embodiment, determination of the different route comprises determination of the different route such that at least a portion of the different route is located in a direction from at least a portion of the route that corresponds with the movement direction.

In at least one example embodiment, the determination of the route is based, at least in part, on a mode of transportation, the route change input corresponds with rotation of the object, and the determination of the different route comprises determination of a different mode of transportation based, at least in part, on the rotation of the object, such that the determination of the different route is based, at least in part, on the different mode of transportation.

In at least one example embodiment, the determination that the object is associated with a point of interest comprises determination that the object is associated with a type of point of interest, and identification of a point of interest that corresponds with the type of point of interest.

One or more example embodiments further perform receipt of information indicative of an association between the object and the point of interest, wherein the determination that the object is associated with the point of interest is based, at least in part, on the information indicative of an association between the object and the point of interest.

One or more example embodiments further perform receipt of information indicative of a map invocation input wherein the causation of display of map information is caused by the map invocation input.

In at least one example embodiment, the map invocation input comprises a voice input.

In at least one example embodiment, the map invocation input comprises visual information indicative of selection of the object.

In at least one example embodiment, the visual information indicative of selection of the object is a pointing gesture directed to the object.

In at least one example embodiment, the visual information indicative of selection of the object is a grasping of the object by a hand.

One or more example embodiments further perform identification of at least one different object represented by the visual information, and determination that the different object is associated with a different point of interest, the different object being absent an indication of the different point of interest, wherein causation of display of the map information comprises a representation of the different point of interest based, at least in part, on the determination that the different object is associated with the different point of interest.

One or more example embodiments further perform determination of a route that includes the point of interest and the different point of interest, wherein causation of display of the map information comprises a representation of the route.

In at least one example embodiment, determination of the route comprises determination of a route between the point of interest and the different point of interest.

One or more example embodiments further perform determination of a spatial relationship between the object and the different object, wherein the determination of the route is based, at least in part, on the spatial relationship.

In at least one example embodiment, the spatial relationship refers to a sequence of the object, and the different object.

In at least one example embodiment, the spatial relationship comprises the object being leftward of the different object from the user's perspective, and determination of the route comprises determination of the route from the point of interest to the different point of interest based, at least in part, on the object being leftward of the different object from the user's perspective.

In at least one example embodiment, the spatial relationship comprises the object being upward of the different object from the user's perspective, and determination of the route comprises determination of the route from the object to the different object based, at least in part, on the object being upward of the different object from the user's perspective.

One or more example embodiments further perform identification of at least one other different object represented by the visual information, and determination that the other different object is associated with another different point of interest, the other different object being absent an indication of the other different point of interest, wherein causation of display of the map information comprises a representation of the other different point of interest based, at least in part, on the determination that the other different object is associated with the other different point of interest, and determination of the spatial relationship between the object and the different object comprises determination of the spatial relationship between the object, the different object, and the other different object.

In at least one example embodiment, the spatial relationship refers to a sequence of the object, the different object, and the other different object.

In at least one example embodiment, the spatial relationship comprises the object being leftward of the different object from the user's perspective, and the different object being leftward of the other different object from the user's perspective, and determination of the route comprises determination of the route from the point of interest to the different point of interest, and from the different point of interest to the other different point of interest based, at least in part, on the object being leftward of the different object from the user's perspective, and the different object being leftward of the other different object from the user's perspective.

In at least one example embodiment, the spatial relationship comprises the object being upward of the different object from the user's perspective, and the different object being upward of the other different object from the user's perspective, and determination of the route comprises determination of the route from the object to the different object, and from the different object to the other different object based, at least in part, on the object being upward of the different object from the user's perspective, and the different object being upward of the other different object from the user's perspective.

In at least one example embodiment, the different point of interest indicates a waypoint between the point of interest and the other different point of interest.

One or more example embodiments further perform determination of a change in the spatial relationship between the object, the different object, and the other different object, determination of a different route based, at least in part, on the determination of the different spatial relationship, and causation of display of a representation of the different route.

One or more example embodiments further perform termination of display of the route.

In at least one example embodiment, the change in spatial relationship is a change of a sequence of the object, the different object, and the other different object.

### BRIEF DESCRIPTION OF THE DRAWINGS

For a more complete understanding of embodiments of the invention, reference is now made to the following descriptions taken in connection with the accompanying drawings in which:
FIGURE 1 is a block diagram showing an apparatus according to at least one example embodiment;
FIGURES 2A-2C are diagrams illustrating map information according to at least one example embodiment;
FIGURE 3 is a diagram illustrating the receipt of visual information according to at least one example embodiment;
FIGURES 4A-4B are diagrams showing object and point of interest association according to at least one example embodiment;
FIGURES 5A-5D are diagrams illustrating display of map information based on objects associated with points of interest according to at least one example embodiment;
FIGURES 6A-6D are diagrams illustrating display of map information based on objects associated with points of interest according to at least one example embodiment;
FIGURE 7 is a flow diagram illustrating activities associated with display of map information according to at least one example embodiment;
FIGURE 8 is a flow diagram illustrating activities associated with receiving information indicative of a map invocation input according to at least one example embodiment;
FIGURE 9 is a flow diagram illustrating activities associated with establishment of an association between a point of interest and an object according to at least one example embodiment;
FIGURE 10 is a flow diagram illustrating activities associated with establishment of an association between a point of interest type and an object according to at least one example embodiment;
FIGURE 11 is a flow diagram illustrating activities associated with determining a route between a point of interest and a current location of an apparatus according to at least one example embodiment;
FIGURE 12 is a flow diagram illustrating activities associated with determining a route change according to at least one example embodiment;
FIGURE 13 is a flow diagram illustrating activities associated with determining a spatial relationship between objects according to at least one example embodiment; and
FIGURE 14 is a flow diagram illustrating activities associated with determining a different route based on a spatial relationship according to at least one example embodiment.

### DETAILED DESCRIPTION OF THE DRAWINGS

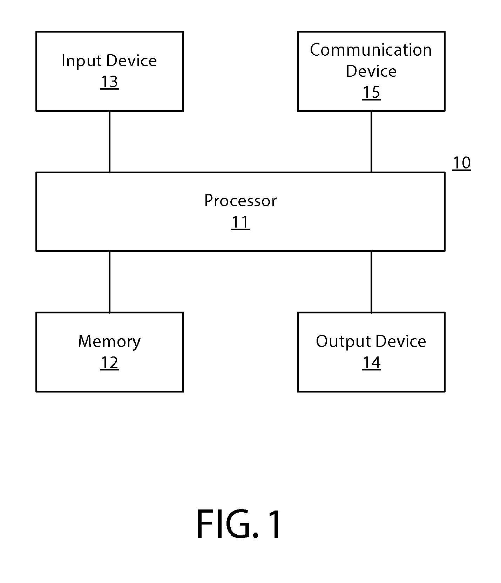

An embodiment of the invention and its potential advantages are understood by referring to FIGURES 1 through 14 of the drawings.

Some embodiments will now be described more fully hereinafter with reference to the accompanying drawings, in which some, but not all, embodiments are shown. Various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network apparatus, other network apparatus, and/or other computing apparatus.

As defined herein, a "non-transitory computer-readable medium," which refers to a physical medium (e.g., volatile or non-volatile memory device), can be differentiated from a "transitory computer-readable medium," which refers to an electromagnetic signal.

FIGURE 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from embodiments of the invention and, therefore, should not be taken to limit the scope of the invention. While electronic apparatus 10 is illustrated and will be hereinafter described for purposes of example, other types of electronic apparatuses may readily employ embodiments of the invention. Electronic apparatus 10 may be a personal digital assistant (PDAs), a pager, a mobile computer, a desktop computer, a television, a gaming apparatus, a laptop computer, a tablet computer, a media player, a camera, a video recorder, a mobile phone, a wearable apparatus, a head worn apparatus, a head mounted display apparatus, a wrist worn apparatus, a watch apparatus, a finger worn apparatus, a ring apparatus, a global positioning system (GPS) apparatus, an automobile, a kiosk, an electronic table, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like.

Furthermore, apparatuses may readily employ embodiments of the invention regardless of their intent to provide mobility. In this regard, even though embodiments of the invention may be described in conjunction with mobile applications, it should be understood that embodiments of the invention may be utilized in conjunction with a variety of other applications, both in the mobile communications industries and outside of the mobile communications industries. For example, the apparatus may be, at least part of, a non-carryable apparatus, such as a large screen television, an electronic table, a kiosk, an automobile, and/or the like.

In at least one example embodiment, electronic apparatus 10 comprises processor 11 and memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types. By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing embodiments of the invention including, for example, one or more of the functions described herein. For example, processor 11 may comprise means, such as a digital signal processor device, a microprocessor device, various analog to digital converters, digital to analog converters, processing circuitry and other support circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 1 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus, and/or the like. For example, the apparatus may send the information to a separate display, to a computer, to a laptop, to a mobile apparatus, and/or the like. For example, the apparatus may be a server that causes display of the information by way of sending the information to a client apparatus that displays the information. In this manner, causation of display of the information may comprise sending one or more messages to the separate apparatus that comprise the information, streaming the information to the separate apparatus, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may comprise information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition, or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In embodiments including a keypad, the keypad may comprise numeric (for example, 0-9) keys, symbol keys (for example, #, *), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display, or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software necessary for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element such as a co-processor that assists the processor 11 in processing image data and an encoder and/or decoder for compressing and/or decompressing image data. The encoder and/or decoder may encode and/or decode according to a standard format, for example, a Joint Photographic Experts Group (JPEG) standard format.

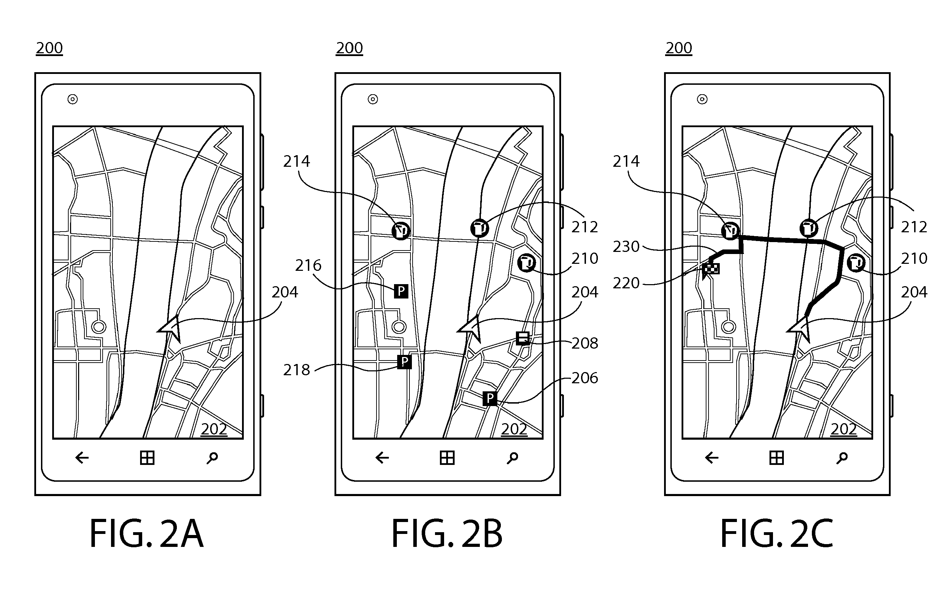

FIGURES 2A-2C are diagrams illustrating map information according to at least one example embodiment. The examples of FIGURES 2A-2C are merely examples and do not limit the scope of the claims. For example, the points of interest may vary, the route may vary, the current location may vary, and/or the like.

In many circumstances, it may be desirable for a person to know his approximate location. For example, the person may desire to know his approximate location so that he can estimate his distance from a different location, inform other persons of his location, and/or the like. In such circumstances, the person may find it desirable to estimate his location by determining the location of the apparatus. In at least one example embodiment, the apparatus determines the location of the apparatus. For example, the apparatus may determine the location of the apparatus by way of a Global Positioning System, a cellular telephone network, radio triangulation, and/or the like. In such circumstances, the apparatus may inform the user of the apparatus of the location of the apparatus. In such circumstances, the user may be able to estimate his location based, at least in part, on the location of the apparatus.

Oftentimes when a person knows his approximate location, it may be desirable to perceive the location with respect to the location's surroundings. For instance, a person may desire to know which direction to travel to reach a different location, determine the distance to a different location, direct another person from a different location to the person's location, and/or the like. In such circumstances, it may be desirable for the apparatus to display map information to a user of the apparatus. Map information may comprise visual information representative of a location displayed to the user of the apparatus, one or more cartographic details such as roads, one or more geographical features, one or more political boundaries, one or more labels, one or more cardinal directions, one or more scales, and/or the like. For example, map information may comprise a visual representation of a city street layout, with labels for street names, and the borders of the city. In another example, the map information may comprise a floor plan of a large structure, such as an office building, a cruise ship, a stadium, and/or the like. In at least one example embodiment, the apparatus causes display of map information. In at least one example embodiment, map information includes a location indicator that indicates the location of the apparatus. For example, the location indicator may indicate that the location of the apparatus is a particular location, such as a location in a city. In another example, the location indicator may indicate that the location of the apparatus is a relative location, such as a location on a moving cruise ship.

FIGURES 2A-2C illustrate an apparatus 200 which comprises a display. It can be seen that map information 202 is displayed on apparatus 200. Even though map information 202 as illustrated is visual information representative of a particular location, in some circumstances map information 202 may be representative of other locations. It can be seen that map information 202 includes visual representations of roads, geographical features, and cardinal directions. Map information 202 comprises apparatus location indicator 204. Apparatus location indicator 204 represents the current location of the apparatus. Even though apparatus location indicator 204 as illustrated corresponds with a particular location, in some circumstances apparatus location indicator 204 may correspond with other locations. For example, in circumstances where apparatus 200 is moved to a different location, apparatus location indicator 204 may be displayed at a different position with respect to map information 202 that represents the different location.

Often when viewing map information, a person may find it desirable for the map information to comprise points of interest. In at least one example embodiment, map information comprises one or more points of interest. FIGURE 2B illustrates map information 202 comprising representations points of interest 206, 208, 210, 212, 214, 216, and 218. A representation of a point of interest may be map information corresponding with a location of a point of interest. A point of interest may be a location that the person my find useful or interesting. For example, a point of interest may correspond with a restaurant, a fuel refilling station, a hotel, a tourist attraction, and/or the like. For instance, a user may wish to determine a location of a fuel refilling station near the location of an apparatus. In circumstances such as these, a user of the apparatus may use map information to assist in navigating to the location of a particular point of interest. For example, a user of apparatus 200 may plan a navigation route from the location corresponding with apparatus location indicator 204 to a location corresponding with representation of point of interest 214 based, at least in part, on map information 202.

Often when viewing map information, a person may find it desirable for the map information to comprise a representation of a route. In at least one example embodiment, map information comprises one or more routes. FIGURE 2C illustrates map information 202 comprising representation of destination 220 and representation of route 230. A representation of a destination may comprise map information corresponding with a location of a destination. A destination may comprise a location which a user desires to navigate to. In at least some circumstances, a destination may comprise a point of interest. A representation of a route may comprise map information corresponding with a route to a destination. A route may comprise a course of travel taken to reach a destination. For example, a user desiring to travel to the destination represented by representation of destination 220 may follow a course of travel that corresponds with representation of route 230.

A route may include one or more waypoints. A waypoint may comprise a reference point used for navigation, such as coordinates, landmarks, locations, and/or the like. In at least one example embodiment, a point of interest is a waypoint. For example, it can be seen in FIGURE 2C that representation of route 230 includes representations of points of interest 210, 212, and 214. In this respect, representations of points of interest 210, 212, and 214 are representative of waypoints included in the route represented by representation of route 230.

In at least some circumstances, a route may be based on a mode of transportation. Modes of transportation may include vehicle transportation, pedestrian transportation, mass transit transportation, and/or the like. For instance, a route based on vehicle transportation may vary from a route based on pedestrian transportation. For example, a route based on vehicle transportation may include freeways that are inaccessible by pedestrians. In another example, a route based on pedestrian transportation may include sidewalks that are inaccessible by a vehicle.

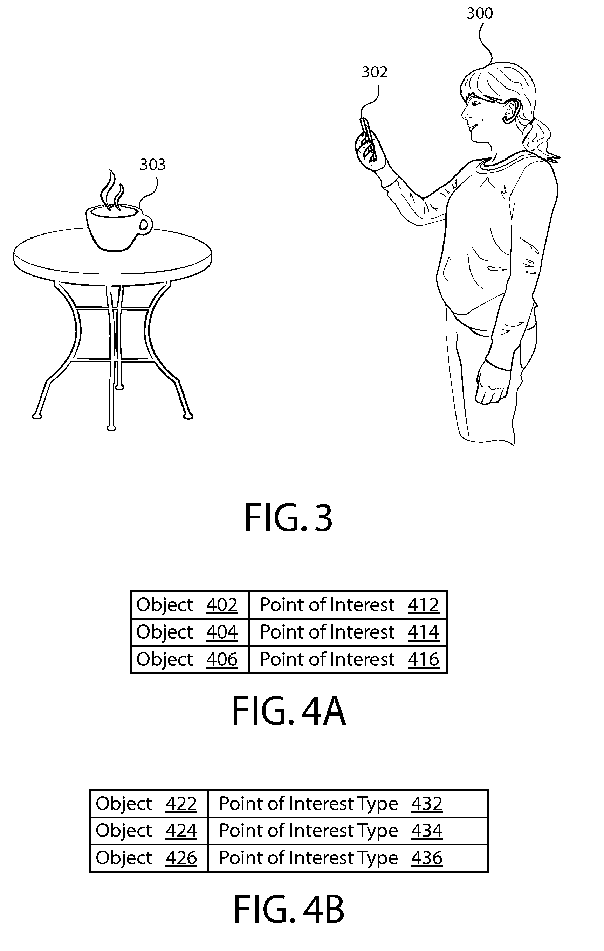

FIGURE 3 is a diagram illustrating the receipt of visual information according to at least one example embodiment. The example of FIGURE 3 is merely an example and does not limit the scope of the claims. For example, the visual information may vary, the apparatus may vary, the object may vary, and/or the like.

In many circumstances, it may be desirable for an apparatus to receive visual information. For example, a user may wish to identify an object comprised by the visual information, record the information for later use, share the visual information, and/or the like. In at least one example embodiment, an apparatus receives visual information. Visual information may refer to information observable by a camera module of an apparatus. For example, visual information may comprise shapes, objects, light, colors, visual images, and/or the like.

The example of FIGURE 3 illustrates apparatus 302 receiving visual information representing object 303. In the example of FIGURE 3, apparatus 302 is operated by user 300. In the example of FIGURE 3, apparatus 302 comprises a camera module similar as described regarding FIGURE 1, and receives visual information from the camera module. It can be seen that object 303 is an object that is positioned in front of apparatus 302. Even though the example of FIGURE 3 illustrates apparatus 302 being operated directly by user 300, apparatus 302 may also be operated indirectly, such as by a separate apparatus, a remote control, and/or the like. Even though the example of FIGURE 3 illustrates apparatus 302 as a single integrated device, in some instances apparatus 302 may comprise multiple devices in communication with one another.

In many circumstances, it may be desirable for the apparatus to identify an object represented by the visual information. For instance, identification of an object may trigger some other function of the apparatus. For example, the user may not be familiar with the object, and the apparatus may display information indicative of the object's identity to the user upon identification of the object. In at least one example embodiment, the apparatus identifies an object represented by the visual information. For example, apparatus 302 may identify object 303 as a coffee cup. In at least one embodiment, identification of the object comprises causing display of visual information, and receiving information indicative of an object identification input that identifies a portion of the visual information that comprises a representation of the object. In this manner, the identification of the object represented in the visual information is based, at least in part, on the object identification input. An object identification input may be a touch input, a voice input, a tactile input, and/or the like. In some circumstances, the object identification may be automatic. For example, the apparatus may identify a particular object based on its prominence within the visual information, being centered within the visual information, by way of one or more object identification algorithms, and/or the like.

FIGURES 4A-4B are diagrams showing object and point of interest association according to at least one example embodiment. The examples of FIGURES 4A-4B are merely examples and do not limit the scope of the claims. For example, the object count may vary, the points of interest count may vary, associations between the objects and points of interest may vary, and/or the like.

As users have become more dependent upon their apparatuses for mapping and navigation, users have grown to utilize mapping and navigation services much more frequently. In many circumstances, users may desire to quickly and intuitively view one or more points of interests in relation to a map. For example, a user may desire to avoid typing information to identify a point of interest. In many circumstances, a user may have many different objects at his disposal. The user may desire to allocate some of these objects to particular points of interest. In this manner, the user may be able to identify a particular point of interest by way of visual information that includes a representation of the object.

In some circumstances, it may be desirable for an apparatus to identify a point of interest. For example, in some circumstances, it may be desirable to determine that an object is associated with the point of interest. For example, a point of interest may be the Eiffel Tower and an object may be a coffee cup. In such an example, it may be desirable to determine that the coffee cup is associated with the Eiffel Tower.

In at least one example embodiment, the apparatus establishes an association between a point of interest and an object. For example, after the apparatus has identified an object represented by the visual information, the user may select a point of interest from a list, enter a point of interest via voice recognition, map selection, manual entry, and/or the like. In this manner, the apparatus may establish that the identified point of interest is associated with the object. For example, after the apparatus identifies a coffee cup, the user may select the Eiffel Tower from a list of points of interest. In at least one example embodiment, the apparatus identifies a point of interest. In at least one example embodiment, the apparatus determines that an object is associated with the point of interest. In at least one example embodiment, the object is absent an indication of the point of interest. An indication of the point of interest may be a visual characteristic of the object that indicates the point of interest, a location of the point of interest, and/or the like. A visual characteristic may be text information, image information, map information, barcode information, and/or the like. A visual characteristic may indicate the identity of the point of interest, the appearance of the point of interest, a physical characteristic of the point of interest, a location of the point of interest, and/or the like. For example, a coffee cup may be absent an indication of the Eiffel Tower if it does not contain any text or imagery that indicates the Eiffel Tower.

In at least one example embodiment, the apparatus determines that an object that is absent an indication of the point of interest is associated with the point of interest. In at least one example embodiment, the determination that the object is associated with the point of interest excludes identification of a visual characteristic of the object that indicates the point of interest. For example, the determination may exclude operations that identify visual characteristics of the object. For instance, the apparatus may determine that a coffee cup is associated with the Eiffel Tower without performing operations that identify visual characteristics of the coffee cup. In this manner, the apparatus may determine that an object is associated with a point of interest in circumstances where the object is absent visual characteristics that indicate the point of interest.

In some circumstances, it may be desirable to establish an association between a point of interest and an object. For example, in some circumstances, it may be desirable to identify associations between a point of interest and an object by way of a point of interest object association data structure. In at least one example embodiment, a point of interest object association data structure is a data structure that indicates one or more associations between a point of interest and a specific object. The point of interest object association data structure may be a table, a database, a list, a graph, a queue, and/or the like. In at least one example embodiment, causation of establishment of an association between an object and a point of interest comprises storage of information indicative of the association in memory. For example, causation of establishment of an association between an object and a point of interest may comprise storage of information indicative of the association in a point of interest object association data structure that is stored in memory.

In at least one example embodiment, the apparatus receives information indicative of an association between the object and the point of interest. In this manner, the determination that the object is associated with the point of interest may be based, at least in part, on the information indicative of an association between the object and the point of interest. For example, apparatus 302 of FIGURE 3 may receive information indicative of the association between an object and a point of interest from a server, a different apparatus, and/or the like. The information may be data, metadata, and/or the like that is indicative of the association between the object and the point of interest.

In at least one example embodiment, the apparatus sends information indicative of the association between the object and the point of interest to a separate apparatus. The information may, for example, identify the association between the object and the point of interest, the association between the point of interest and the object, and/or the like. For example, apparatus 302 of FIGURE 3 may send information indicative of the association between an object and a point of interest to server, a different apparatus, and/or the like. Such information may cause the server, the different apparatus, and/or the like to establish the indicated association.'

FIGURE 4A is a diagram showing object and point of interest association according to at least one example embodiment. The example of FIGURE 4A illustrates an embodiment of a point of interest object association data structure. The point of interest object association data structure of FIGURE 4A comprises information indicative of associations between object 402 point of interest 412, between object 404 and point of interest 414, and between object 406 and point of interest 416. For example, object 406 may be a coffee cup, and point of interest 416 may be the Eiffel Tower. As such, an association between object 406 and point of interest 416 has been established and stored in the point of interest object association data structure of FIGURE 4A.

In some circumstances, it may be desirable for an apparatus to identify a type point of interest. For example, in some circumstances, it may be desirable to determine that an object is associated with a point of interest by identification of a point of interest type that corresponds with a type of point of interest. In at least one example embodiment, a point of interest type identifies a classification that may be applicable to a plurality of points of interest. For example, a point of interest type may be fuel refilling stations and the point of interest may be a particular fuel refilling station.

In at least one example embodiment, the apparatus establishes an association between a point of interest type and an object. For example, after the apparatus has identified an object represented by the visual information, the user may select a point of interest type from a list, enter a point of interest type via voice recognition, map selection, manual entry, and/or the like. In this manner, the apparatus may establish that the identified point of interest type is associated with the object. For example, after the apparatus identifies a coffee cup, the user may select fuel refilling stations from a list of point of interest types. In at least one example embodiment, the apparatus identifies a point of interest type. In at least one example embodiment, the apparatus determines that an object is associated with the point of interest type. In at least some circumstances, the object may be absent an indication of the point of interest type. In at least one example embodiment, the apparatus determines that an object is associated with a point of interest by determining that the object is associated with a type of point of interest, and identifying a point of interest that corresponds with the type of point of interest. For example, in circumstances where the object is a coffee cup, the apparatus may determine that the coffee cup is associated with fuel refilling stations.

In some circumstances it may be desirable to establish an association between a point of interest type and an object. For example, in some circumstances, it may be desirable to identify associations between point of interest types and objects by way of a point of interest type object association data structure. In at least one example embodiment, a point of interest type object association data structure is a data structure that indicates one or more associations between a point of interest type and a specific object. The point of interest type object association data structure may be a table, a database, a list, a graph, a queue, and/or the like. In at least one example embodiment, causation of establishment of an association between an object and a point of interest type comprises storage of information indicative of the association in memory. For example, causation of establishment of an association between an object and a point of interest type may comprise storage of information indicative of the association in a point of interest type object association data structure that is stored in memory.

In at least one example embodiment, the apparatus receives information indicative of an association between the object and the point of interest type. In this manner, the determination that the object is associated with the point of interest type may be based, at least in part, on the information indicative of an association between the object and the point of interest type. For example, apparatus 302 of FIGURE 3 may receive information indicative of the association between an object and a point of interest type from a server, a different apparatus, and/or the like. The information may be data, metadata, and/or the like that is indicative of the association between the object and the point of interest type.

In at least one example embodiment, the apparatus sends information indicative of the association between the object and the point of interest type to a separate apparatus. The information may, for example, identify the association between the object and the point of interest type, the association between the point of interest type and the object, and/or the like. For example, apparatus 302 of FIGURE 3 may send information indicative of the association between an object and a point of interest type to server, a different apparatus, and/or the like. Such information may cause the server, the different apparatus, and/or the like to establish the indicated association.

FIGURE 4B is a diagram showing object and point of interest type association according to at least one example embodiment. The example of FIGURE 4B illustrates an embodiment of a point of interest type object association data structure. The point of interest type object association data structure of FIGURE 4B comprises information indicative of associations between object 422 and point of interest type 432, between object 424 and point of interest type 434, and between object 426 and point of interest type 436. For example, object 426 may be a coffee cup, and point of interest type 436 may be historical landmarks. As such, an association between object 426 and point of interest type 436 has been established and stored in the point of interest type object association data structure of FIGURE 4B.

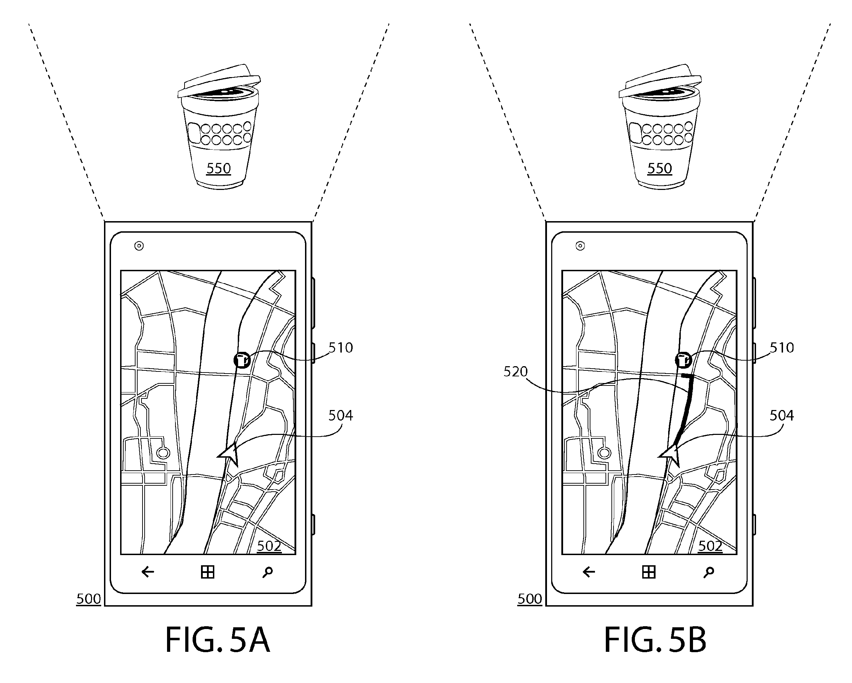

FIGURES 5A-5D are diagrams illustrating display of map information based on objects associated with points of interest according to at least one example embodiment. The examples of FIGURES 5A-5D are merely examples and do not limit the scope of the claims. For example, the objects may vary, the points of interest may vary, the apparatus may vary, and/or the like.

In at least some circumstances, it may be desirable for an apparatus to display map information based on objects associated with points of interest. For example, it may be easier to display a point of interest on an apparatus by causing the apparatus to identify an object that is associated with the point of interest than to manually select the point of interest in a multilevel menu system on the apparatus.

FIGURES 5A-5D illustrate an apparatus 500 which comprises a display. It can be seen that map information 502 is displayed on apparatus 500. Even though map information 502 as illustrated is visual information representative of a particular location, in some circumstances map information 502 may be representative of other locations. It can be seen that map information 502 includes visual representations of roads, geographical features, and cardinal directions. Map information 502 comprises apparatus location indicator 504. Apparatus location indicator 504 represents the current location of the apparatus. Even though apparatus location indicator 504 as illustrated corresponds with a particular location, in some circumstances apparatus location indicator 504 may correspond with other locations. For example, in circumstances where apparatus 500 is moved to a different location, apparatus location indicator 504 may be displayed at a different position with respect to map information 502 that represents the different location. Additionally, map information 502 comprises representation of point of interest 510. Representation of point of interest 510 may represent a location of a point of interest that corresponds with the position of representation of point of interest 510 on map information 502. FIGURES 5A-5D also illustrate an object 550. Even though object 550 is illustrated as a hot beverage container, object 550 may be any physical object. It should be understood that FIGURES 5A-5D illustrate object 550 as within a capture region of a camera module comprised by apparatus 500. In this manner, apparatus 500 may receive visual information representative of object 550.

In at least one example embodiment, the apparatus causes display of map information that comprises a representation of a point of interest. For instance, in the example of FIGURES 5A-5D it can be seen that apparatus 500 is displaying map information 502. In this example, it can be understood that apparatus 500 is causing the display of map information 502 such that it comprises representation of point of interest 510. In at least one example embodiment, the causation of display of map information that comprises a representation of the point of interest is based, at least in part, on the determination that the object is associated with the point of interest. For instance, in the example of FIGURES 5A-5D, apparatus 500 may be receiving visual information representative of object 550. In circumstances where object 550 is associated with the point of interest represented by representation of point of interest 510, apparatus 500 may cause the display of representation of point of interest 510 as illustrated in FIGURES 5A-5D based on the association of object 550 and the point of interest represented by representation of point of interest 510.

In some circumstances, it may be desirable to determine a route between a point of interest and a current location of an apparatus. In circumstances such as these, it may be desirable to display a representation of the route. For example, displaying the representation of the route may aid the user in navigating to the point of interest. In at least one example embodiment, determination of the route is caused by the determination that the object is associated with the point of interest. In at least one example embodiment, the apparatus determines a route between a point of interest and a current location of the apparatus. For example, apparatus 500 may determine a route between the current location of apparatus 500 and a point of interest, such as the point of interest represented by representation of point of interest 510. In at least one example embodiment, causation of display of the map information comprises a representation of the route. FIGURE 5B illustrates map information 502 comprising representation of a route 520. It can be seen that representation of a route 520 is representative of a route between the location represented by apparatus location indicator 504 and the location represented by representation of point of interest 510. In at least one example embodiment, the route is from the current location of the apparatus to the point of interest. For example, the route represented by representation of a route 520 may be a route from the current location of apparatus 500 to the point of interest represented by representation of point of interest 510. In at least one example embodiment, the route is from the point of interest to the current location of the apparatus. For example, the route represented by representation of a route 520 may be a route from the point of interest represented by representation of point of interest 510 to the current location of apparatus 500.

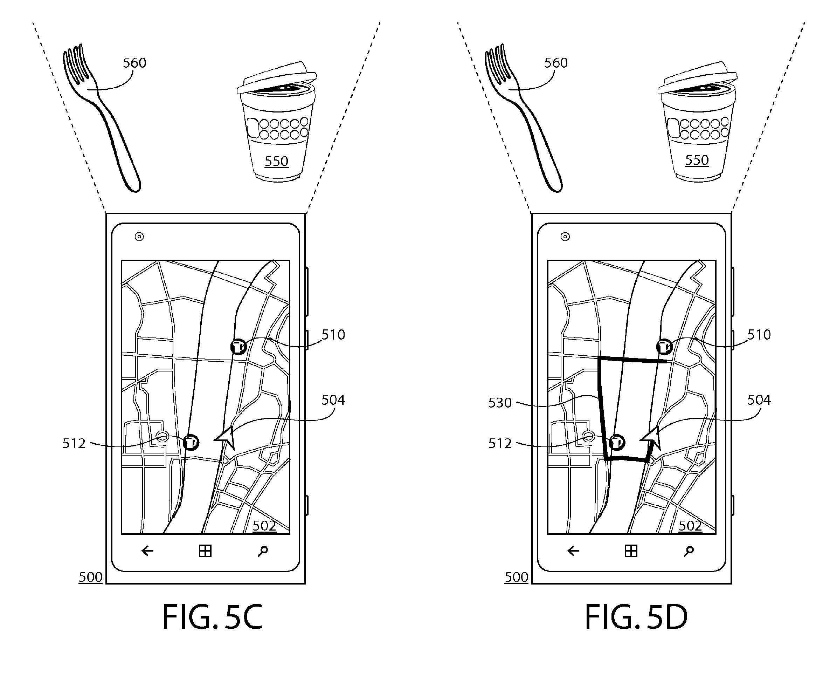

In some circumstances, it may be desirable to identify a different object represented by the visual information. For example, different objects may be associated with different points of interest. It may be intuitive to cause display of another point of interest on an apparatus by causing the apparatus to identify a different object that is associated with the other point of interest. FIGURES 5C-5D illustrates map information 502 comprising representation of point of interest 512. Representation of point of interest 512 may represent a location of a point of interest that corresponds with the position of representation of point of interest 512 on map information 502. FIGURES 5C-5D also illustrate a different object 560. A different object may be any physical object other than the object. For example, even though object 560 is illustrated as a fork, object 560 may be any physical object except for object 550. It should be understood that FIGURES 5C-5D illustrate object 560 as within a capture region of a camera module comprised by apparatus 500. In this manner, apparatus 500 may receive visual information representative of object 560.

In at least one example embodiment, the apparatus identifies at least one different object represented by the visual information. In at least one example embodiment, the apparatus causes display of map information that comprises a representation of the different point of interest. For instance, in the examples of FIGURE 5C-5D it can be seen that apparatus 500 is displaying map information 502. In this example, it can be understood that apparatus 500 is causing the display of map information 502 such that it comprises representation of different point of interest 512. In at least one example embodiment, the causation of display of map information that comprises a representation of the different point of interest is based, at least in part, on the determination that the different object is associated with the different point of interest. For instance, in the example of FIGURES 5C-5D, apparatus 500 may be receiving visual information representative of object 560. In circumstances where different object 560 is associated with the different point of interest represented by representation of different point of interest 512, apparatus 500 may cause the display of representation of different point of interest 512 as illustrated in FIGURES 5C-5D based on the association of different object 560 and the different point of interest represented by representation of different point of interest 512.

In some circumstances, it may be desirable to determine a route between a point of interest, a different point of interest, and a current location of an apparatus. In circumstances such as these, it may be desirable to display a representation of the route. For example, displaying the representation of the route may aid the user in navigating to the point of interest and the different point of interest. In at least one example embodiment, the apparatus determines a route that includes a point of interest, a different point of interest, and a current location of the apparatus. For example, apparatus 500 may determine a route between the current location of apparatus 500, a point of interest, and a different point of interest, such as the point of interest represented by representation of point of interest 510 and the different point of interest represented by representation of different point of interest 512. In at least one example embodiment, causation of display of the map information comprises a representation of the route. FIGURE 5D illustrates a representation of a route 530 comprising map information 502. It can be seen that representation of a route 530 is representative of a route between the location represented by apparatus location indicator 504, the location represented by representation of point of interest 510, and the location represented by representation of different point of interest 512. In at least one example embodiment, the route is from the current location of the apparatus to the point of interest.

In some circumstances, it may be desirable to determine a route between a point of interest and a different point of interest that excludes the location of the apparatus from the route. For example, the route may be intended for a person at a location different from the location of the apparatus who wishes to navigate between the point of interest and the different point of interest. In at least one example embodiment, the apparatus determines a route that includes a point of interest and a different point of interest. In this manner the route may exclude the location of the apparatus from the route. For example, apparatus 500 may determine a route between a point of interest and a different point of interest, such as the point of interest represented by representation of point of interest 510 and the different point of interest represented by representation of different point of interest 512 in a manner that excludes the location of the apparatus from the route.

When determining a route between points of interest, it may be desirable to determine the route based, at least in part, on a spatial relationship between objects. For example, the objects may be associated with points of interest. It may be intuitive for a user to arrange the objects in a particular spatial relationship that represents a desired route. For example, a left to right arrangement may be intuitive because people in western populations generally read from left to right. In a different example, an up to down arrangement may be intuitive to people in eastern populations. A spatial relationship may refer to a sequence of an object and different object. For example, it can be seen in FIGURES 5C-5D that object 550 and different object 560 have a special relationship such that different object 560 is leftward of object 550. This spatial arrangement may be used to determine a route in circumstances where object 550 and different object 560 are associated with points of interest.

In at least one example embodiment, the apparatus determines a spatial relationship between an object and a different object. In this manner, determination of a route may be based, at least in part, on the spatial relationship. FIGURE 5D illustrates a representation of a route 530. In the example illustrated by FIGURE 5D, object 550 may be associated with the point of interest represented by representation of point of interest 510, and different object 560 may be associated with the different point of interest represented by representation of different point of interest 512. In circumstances such as these, apparatus 500 may determine the route represented by representation of route 530 based on the spatial relationship between object 550 and different object 560. For example, since different object 560 is leftward of object 550 in FIGURE 5D, apparatus 500 may have determined representation of route 530 based, at least in part on spatial relationship between the objects. It can be seen in FIGURE 5D that representation of route 530 may correspond with traveling to the point of interest represented by representation of different point of interest 512 before traveling to the point of interest represented by representation of point of interest 510. In at least one example embodiment, the spatial relationship is the object being leftward of the different object from the user's perspective, and determination of the route comprises determination of the route from the point of interest to the different point of interest based, at least in part, on the object being leftward of the different object from the user's perspective. In at least one example embodiment, the spatial relationship is the object being upward of the different object from the user's perspective, and determination of the route comprises determination ofthe route from the object to the different object based, at least in part, on the object being upward of the different object from the user's perspective.

In some circumstances, it may be desirable to manipulate map information displayed on the apparatus by changing the spatial relationship between an object and a different object. For example, it may be desirable to manipulate a zoom level of the map information by altering the distance between the object and the different object. A zoom level may refer to a currently displayed scale of the map information. For example, a first zoom level may have a scale of 10 miles per inch, and a second zoom level may have a scale of 5 miles per inch. In circumstances such as these, a user may change the spatial relationship between the object and the different object such that the object and the different object are closer together. The apparatus may then display the map information such that the map information is zoomed out relative to the previous zoom level of the map information based, at least in part, on the object and the different object being closer to each other. For example, the map information may have been displayed with a scale of 5 miles per inch, and the apparatus may then display the map information at a scale of 10 miles per inch. In another example, a user may change the spatial relationship between the object and the different object such that the object and the different object are farther apart. The apparatus may then display the map information such that the map information is zoomed in relative to the previous zoom level of the map information based, at least in part, on the object being farther from the different object. For example, the map information may have been displayed with a scale of 10 miles per inch, and the apparatus may then display the map information at a scale of 5 miles per inch.

In some circumstances, the user may wish to rotate the map information. Rotation of the map information may refer to changing the display of the map information such that it appears rotated around an axis on the display from the user's perspective. For example, the map information may be displayed in a manner that a representation of north on the map information is generally correlated with a top region of the display. The map information may be rotated ninety degrees counterclockwise such that the representation of north on the map information is generally correlated with a left region of the display. In some circumstances, it may be desirable for the user to control rotation of the map information by physically rotating an object. For example, the user may rotate an object seventy degrees counterclockwise. The apparatus may detect this rotation and cause rotation of the map information such that the map information is rotated seventy degrees counterclockwise with respect to the orientation in which the map information was previously displayed based, at least in part, on the rotation of the object. Such a rotation of the map information may occur gradually as an animation as the user rotates the object. In such an example, the map information may appear to rotate on the display.

In some circumstances, it may be desirable for the user to control rotation of the map information by changing the position of the apparatus with respect to the object. For example, the user may change a position of the apparatus such that a camera module comprised by the apparatus captures a different perspective of the object. For instance, the camera module may have been capturing a front side of the object, and the user may change the position of the apparatus such that the camera module captures a back side of the object. The apparatus may detect this change of position and cause rotation of the map information in a manner that correlates with the change of position of the apparatus based, at least in part, on the change of position of the apparatus. The rotation of the map information may occur gradually as an animation as the user changes the position of the apparatus. In circumstances where the object is associated with a point of interest, the map information may appear to rotate on the display around an axis that is centered on a representation of the point of interest.

In some circumstances, it may be desirable for the user to control rotation of the map information by changing the spatial relationship between an object and a different object. For example, the user may physically reposition the object and the different object such that the object and the different object are rotated eighty degrees clockwise with respect to each other. For example, a reference line between the object and the different object may rotate eighty degrees clockwise. In such an example, the object and the different object may rotate around an axis that is centered between the object and the different object. The apparatus may detect this change of spatial relationship between the object and the different object and cause rotation of the map information such that the map information is rotated eighty degrees clockwise with respect to the orientation in which the map information was previously displayed based, at least in part, on the change in the spatial relationship between the object and the different object. In some circumstances, the spatial relationship between the object and the different object may be changed by the user with a compound movement. For example, the user may physically reposition the object and the different object such that they are rotated around an axis centered between the object and the different object, and the distance between the object and the different object is changed. In circumstances such as these, the apparatus may cause rotation of the map information simultaneously with a change in the zoom level of the map information based, at least in part, on the change in the spatial relationship between the object and the different object.

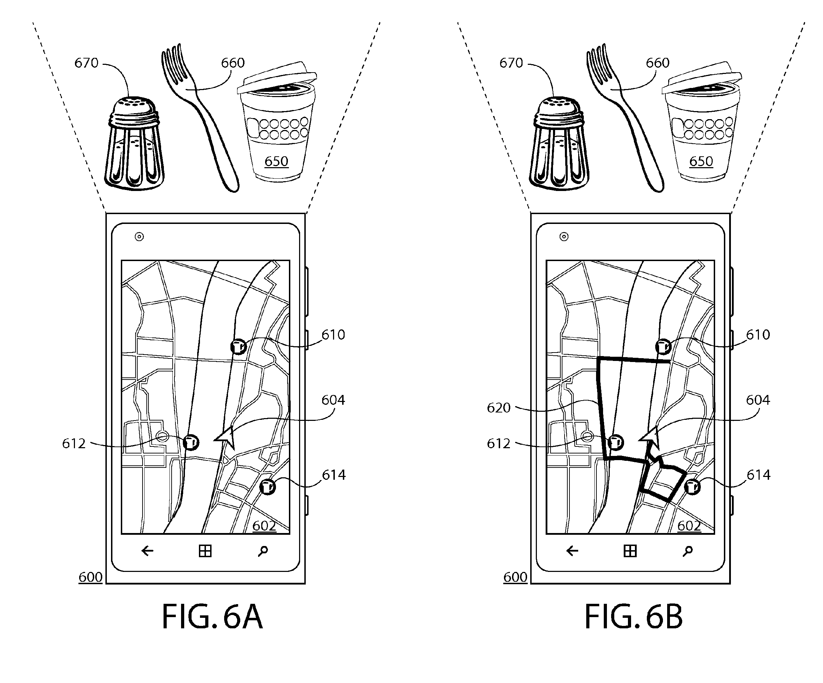

FIGURES 6A-6D are diagrams illustrating display of map information based on objects associated with points of interest according to at least one example embodiment. The examples of FIGURES 6A-6D are merely examples and do not limit the scope of the claims. For example, the objects may vary, the points of interest may vary, the apparatus may vary, and/or the like.

In some circumstances, it may be desirable to utilize several objects to represent several points of interest. For example, different objects may be associated with different points of interest. It may be intuitive to cause display of several points of interest on an apparatus by causing the apparatus to identify several different objects that are each associated with different points of interest.

FIGURES 6A-6D illustrate an apparatus 600 which comprises a display. It can be seen that map information 602 is displayed on apparatus 600. Even though map information 602 as illustrated is visual information representative of a particular location, in some circumstances map information 602 may be representative of other locations. It can be seen that map information 602 includes visual representations of roads, geographical features, and cardinal directions. Map information 602 comprises apparatus location indicator 604. Apparatus location indicator 604 represents the current location of the apparatus. Even though apparatus location indicator 604 as illustrated corresponds with a particular location, in some circumstances apparatus location indicator 604 may correspond with other locations. For example, in circumstances where apparatus 600 is moved to a different location, apparatus location indicator 604 may be displayed at a different position with respect to map information 602 that represents the different location. Additionally, map information 602 comprises representation of points of interest 610, 612, and 614. Representation of points of interest 610, 612, and 614 may represent locations of points of interest that correspond with the positions of representations of point of interest 610, 612, and 614 on map information 602. FIGURES 6A-6D also illustrate objects 650, 660, and 670. Even though objects 650, 660, and 670 are is illustrated as a hot beverage container, a fork, and a shaker respectively, objects 650, 660, and 670 may be any physical objects, so long as objects 650, 660, and 670 are each distinct objects. It should be understood that FIGURES 6A-6D illustrate objects 650, 660, and 670 as within a capture region of a camera module comprised by apparatus 600. In this manner, apparatus 600 may receive visual information representative of objects 650, 660, and 670.

In at least one example embodiment, the apparatus causes display of map information that comprises a representation of a point of interest, a different point of interest, and another different point of interest. For instance, in the example of FIGURES 6A-6D it can be seen that apparatus 600 is displaying map information 602. In this example, it can be understood that apparatus 600 is causing the display of map information 602 such that it comprises representation of points of interest 610, 612, and 614. In at least one example embodiment, the causation of display of map information that comprises a representation of the point of interest is based, at least in part, on the determination that the object is associated with the point of interest. For instance, in the example of FIGURES 6A-6D, apparatus 600 may be receiving visual information representative of objects 650, 660, and 670. In circumstances where object 650 is associated with the point of interest represented by representation of point of interest 610, apparatus 600 may cause the display of representation of point of interest 610 as illustrated in FIGURES 6A-6D based on the association of object 650 and the point of interest represented by representation of point of interest 610. In circumstances where object 660 is associated with the point of interest represented by representation of point of interest 612, apparatus 600 may cause the display of representation of point of interest 612 as illustrated in FIGURES 6A-6D based on the association of object 660 and the point of interest represented by representation of point of interest 612. In circumstances where object 670 is associated with the point of interest represented by representation of point of interest 614, apparatus 600 may cause the display of representation of point of interest 614 as illustrated in FIGURES 6A-6D based on the association of object 670 and the point of interest represented by representation of point of interest 614.

In some circumstances, it may be desirable to determine a route between a point of interest, a different point of interest, another different point of interest, and a current location of an apparatus. In circumstances such as these, it may be desirable to display a representation of the route. For example, displaying the representation of the route may aid the user in navigating to the point of interest and the different point of interest. In at least one example embodiment, the apparatus determines a route that includes a point of interest, a different point of interest, another different point of interest, and a current location of the apparatus. For example, apparatus 600 may determine a route between the current location of apparatus 600 a point of interest, a different point of interest, and another different point of interest, such as the points of interest represented by representation of points of interest 610, 612, and 614. In at least one example embodiment, causation of display of the map information comprises a representation of the route. FIGURES 6B illustrates a representation of a route 620 comprising map information 602. It can be seen that representation of a route 620 is representative of a route between the location represented by apparatus location indicator 604, and the locations represented by representations of points of interest 610, 612, and 614.

In at least one example embodiment, the apparatus determines a spatial relationship between an object, a different object, and another different object. A spatial relationship may refer to a sequence of an object, a different object, and another different object. For example, it can be seen in FIGURES 6A-6B that objects 650, 660, and 670 have a spatial relationship such that object 670 is leftward of object 660, and object 660 is leftward of object 650. This spatial arrangement may be used to determine a route in circumstances where object 650, 660, and 670 are associated with points of interest. In this manner, determination of a route may be based, at least in part, on the spatial relationship. In the example illustrated by FIGURE 6B, object 650 may be associated with the point of interest represented by representation of point of interest 610, object 660 may be associated with the point of interest represented by representation of point of interest 612, and object 670 may be associated with the point of interest represented by representation of point of interest 614. In circumstances such as these, apparatus 600 may determine the route represented by representation of route 620 based on the spatial relationship between objects 650, 660, and 670. For example, since object 670 is leftward of object 660, and object 660 is leftward of object 650 in FIGURE 6B, apparatus 600 may have determined representation of route 620 based, at least in part on spatial relationship between the objects. It can be seen in FIGURE 6B that representation of route 620 may correspond with traveling to the point of interest represented by representation of different point of interest 614 before traveling to the point of interest represented by representation of point of interest 612, and traveling to the point of interest represented by representation of point of interest 612 before traveling to the point of interest represented by representation of point of interest 610. In at least one example embodiment, the different point of interest indicates a waypoint between the point of interest and the other different point of interest. For example, it can be understood in FIGURE 6B that representation of point of interest 612 may indicate a waypoint between the point of interest represented by representation of point of interest 614 and the point of interest represented by representation of point of interest 610.

In some circumstances, it may be desirable to determine a route between a point of interest, a different point of interest, and another different point of interest that excludes the location of the apparatus from the route. For example, the route may be intended for a person at a location different from the location of the apparatus who wishes to navigate between the point of interest, the different point of interest, and the other different point of interest. In at least one example embodiment, the apparatus determines a route that includes a point of interest, a different point of interest, and another different point of interest. In this manner the route may exclude the location of the apparatus from the route. For example, apparatus 600 may determine a route between a point of interest, a different point of interest, and another different point of interest such as the points of interest represented by representation of points of interest 610, 612, and 614 in a manner that excludes the location of the apparatus from the route.

In at least one example embodiment, the spatial relationship is the object being leftward of the different object from the user's perspective, and the different object being leftward of the other different object from the user's perspective. In such an example, the determination of the route may comprise determination of the route from the point of interest to the different point of interest, and from the different point of interest to the other different point of interest based, at least in part, on the object being leftward of the different object from the user's perspective, and the different object being leftward of the other different object from the user's perspective. In at least one example embodiment, the spatial relationship is the object being upward of the different object from the user's perspective, and the different object being upward of the other different object from the user's perspective. In at least one example embodiment, determination of the route comprises determination of the route from the object to the different object, and from the different object to the other different object based, at least in part, on the object being upward of the different object from the user's perspective, and the different object being upward of the other different object from the user's perspective.

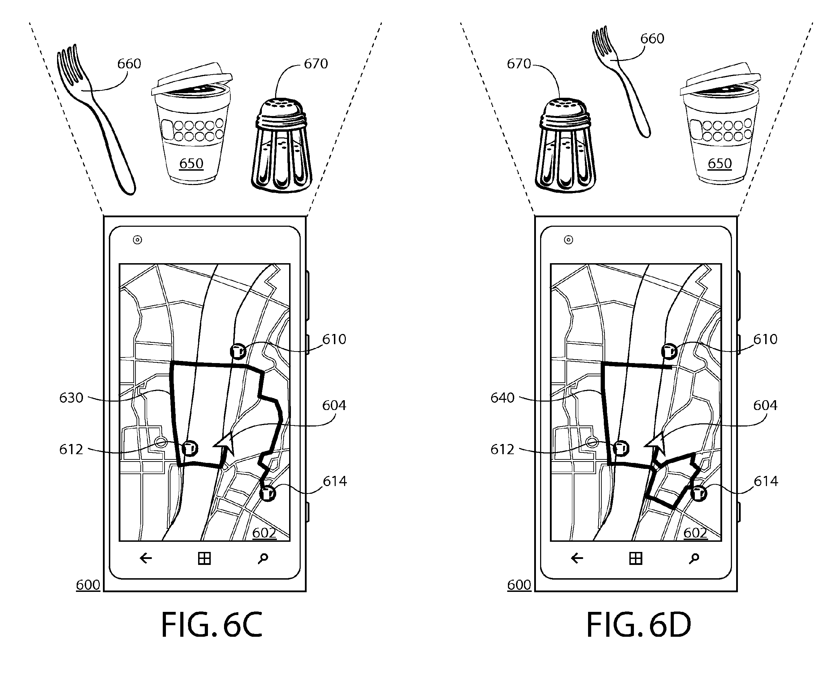

In some circumstances, the spatial relationship between an object, a different object, and another different object may change. For instance, the user may change the order of the objects. For example, in circumstances where objects 650, 660, and 670 have a spatial relationship corresponding with FIGURE 6B, a user may alter the special relationship such that objects 650, 660, and 670 have a spatial relationship corresponding with FIGURE 6C. It can be seen that objects 650, 660, and 670 are illustrated in different positions in FIGURE 6C than the positions illustrated in FIGURE 6B. In another example, a user could change the spatial relationship between objects that are ordered from upward to downward. In circumstances such as these, it may be desirable to determine a different route based, at least in part, on a determination of the different special relationship.

In at least one example embodiment, the apparatus determines a change in the spatial relationship between the object, the different object, and the other different object. In this manner, the apparatus may determine a different route based, at least in part, on the determination of the different spatial relationship. In at least one example embodiment, the change in spatial relationship is a change of a sequence of the object, the different object, and the other different object. FIGURE 6C illustrates representation of a route 630. It can be seen that representation of a route 630 represents a different route than representation of a route 620 of FIGURE 6B. Apparatus 600 may determine that the spatial relationship has changed between objects 650, 660, and 670. For example, the spatial relationship may have changed such that objects 650, 660, and 670 have a spatial relationship similar as illustrated in FIGURE 6C, whereas objects 650, 660, and 670 may have previously had a special relationship similar as illustrated in FIGURE 6B. In circumstances such as these, apparatus 600 may determine a different route that corresponds with representation of a route 630. In at least one example embodiment, the apparatus causes display of a representation of the different route. For example, apparatus 600 may cause display of representation of a route 630. In at least one example embodiment, the apparatus may cause termination of display of the representation of the route. For example, apparatus 600 may cause termination of display of representation of the route 620.

In some circumstances, a user may desire to change the route determined by the apparatus. It may be desirable for the apparatus to receive information indicative of a route change input to initiate such a route change. In at least one example embodiment, the apparatus receives information indicative of a route change input. A route change input may be any input that initiates a route change. For example, a route change input may be a touch input, a voice input, a tactile input, and/or the like. In at least one example embodiment, the apparatus determines a different route based, at least in part, on the route change input. In at least one example embodiment, the apparatus causes display of a representation of the different route. In at least one example embodiment, the apparatus causes termination of display of the representation of the route. For example, FIGURE 6D illustrates a representation of a route 640. In circumstances where display information 602 comprises representation of a route 620 as illustrated in FIGURE 6B and apparatus 600 receives information indicative of a route change input, apparatus 600 may cause display of a representation of different route, such as representation of a route 640 and cause termination of the display of representation of a route 620. In at least one example embodiment, the different route includes the point of interest and the current location of the apparatus. For example, it can be seen that representation of the route 640 includes apparatus location indicator 604 and representations of points of interest 610, 612, and 614. In some circumstances, the different route may include more or fewer points of interest. For example, the new route may include a new point of interest, or it may exclude a point of interest from the original route.

In at least one example embodiment, the route change input corresponds with shaking of the object. Shaking of an object may refer to a user moving an object back and forth in a periodic motion. The shaking motion may be detected by the apparatus as part of the visual information received by the apparatus.

In at least one example embodiment the route change input corresponds with a movement of the object in a movement direction. For example, a movement direction may be a direction such as forward, away, left, and right. For instance, in the example illustrated in FIGURE 6B, object 660 has a particular position. A user may move object 660 in a direction away from apparatus 600 such that the changed position of object 660 corresponds with the position of object 660 illustrated in FIGURE 6D. In at least one example embodiment, the apparatus determines a different route based, at least in part, on the movement direction. In at least one example embodiment, the determination of the different route comprises determination of the different route such that at least a portion of the different route is located in a direction from at least a portion of the route that corresponds with the movement direction. For example, the route may be the route represented by representation of a route 620 in FIGURE 6B. The apparatus may determine a new route that corresponds with the route represented by representation of a route 640 in FIGURE 6D if a user moves object 660 in an away direction. It can be seen that at least a portion of representation of a route 640 corresponds with a route that is different, compared to representation of a route 620, by way of inclusion of a new path that is in a direction from the route that corresponds with the direction of movement of object 660.

In at least one example embodiment, the determination of the route is based, at least in part, on a mode of transportation. In such an example, the route change input may indicate a different mode of transportation. In at least one example embodiment, the route change input corresponds with rotation of the object. In such an example, the determination of the different route comprises determination of a different mode of transportation based, at least in part, on the rotation of the object, such that the determination of the different route is based, at least in part, on the different mode of transportation. For example, the route may be based on a pedestrian mode of transportation. A user may rotate an object such that the apparatus determines a route based on a vehicle mode of transportation.

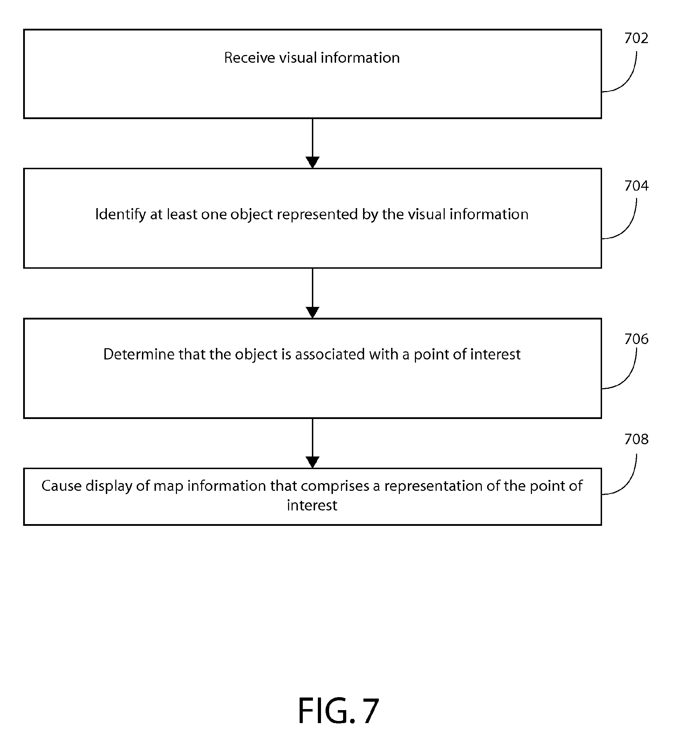

FIGURE 7 is a flow diagram illustrating activities associated with display of map information according to at least one example embodiment. In at least one example embodiment, there is a set of operations that corresponds with the activities of FIGURE 7. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 7.

At block 702, the apparatus receives visual information. The receipt and the visual information may be similar as described regarding FIGURE 3.

At block 704, the apparatus identifies at least one object represented by the visual information. The identification and the object may be similar as described regarding FIGURE 3.

At block 706, the apparatus determines that the object is associated with a point of interest. The determination and the point of interest may be similar as described regarding FIGURES 2A-2C and FIGURES 4A-4B.

At block 708, the apparatus causes display of map information that comprises a representation of the point of interest. In this manner, the causation of display of map information may be based, at least in part, on the determination that the object is associated with the point of interest. The display, the map information, and the representation of the point of interest may be similar as described regarding FIGURES 2A-2C and FIGURES 5A-5D.

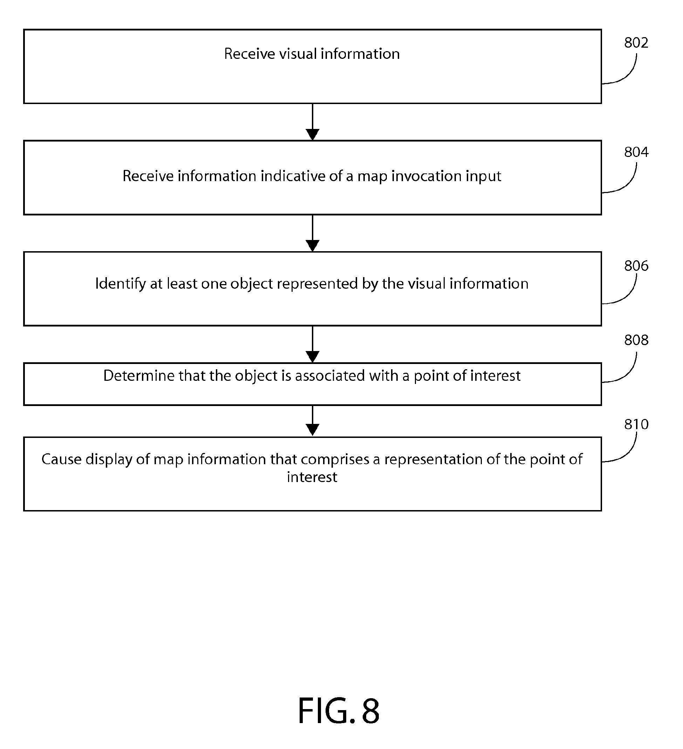

FIGURE 8 is a flow diagram illustrating activities associated with receiving information indicative of a map invocation input according to at least one example embodiment. In at least one example embodiment, there is a set of operations that corresponds with the activities of FIGURE 8. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 8.

In some circumstances, it may be desirable for an apparatus to receive information indicative of a map invocation input. For example, the apparatus may not currently be displaying map information, and the user may wish to see map information displayed on the apparatus. In at least one example embodiment, the apparatus receives information indicative of a map invocation input. In this manner, causation of display of map information may be caused by the map invocation input. A map invocation input may be an input that initiates causation of display of map information. In at least one example embodiment, a map invocation input comprises a voice input. For example, a user may dictate a voice command such as "display map" to initiate causation of display of map information. In at least one example embodiment, the map invocation input comprises visual information indicative of selection of the object. Visual information indicative of selection of the object may be a pointing gesture directed to the object, a grasping of the object by the hand, and/or the like. For example, a user may dictate a voice command such as "display point of interest" while pointing to or grasping at an object that comprises the visual information received by the apparatus. The apparatus may then display a representation of a point of interest associated with that object.

At block 802, the apparatus receives visual information, similarly as described regarding block 702 of FIGURE 7. At block 804, the apparatus receives information indicative of a map invocation input.

At block 806, the apparatus identifies at least one object represented by the visual information, similarly as described regarding block 704 of FIGURE 7. At block 808, the apparatus determines that the object is associated with a point of interest, similarly as described regarding block 706 of FIGURE 7. In at least one example embodiment, the determination that the object is associated with the point of interest is caused by the receipt of the information indicative of the map invocation input.

At block 810, the apparatus causes display of map information that comprises a representation of the point of interest, similarly as described regarding block 708 of FIGURE 7. In this manner, the causation of display of map information may be based, at least in part, by the map invocation input.

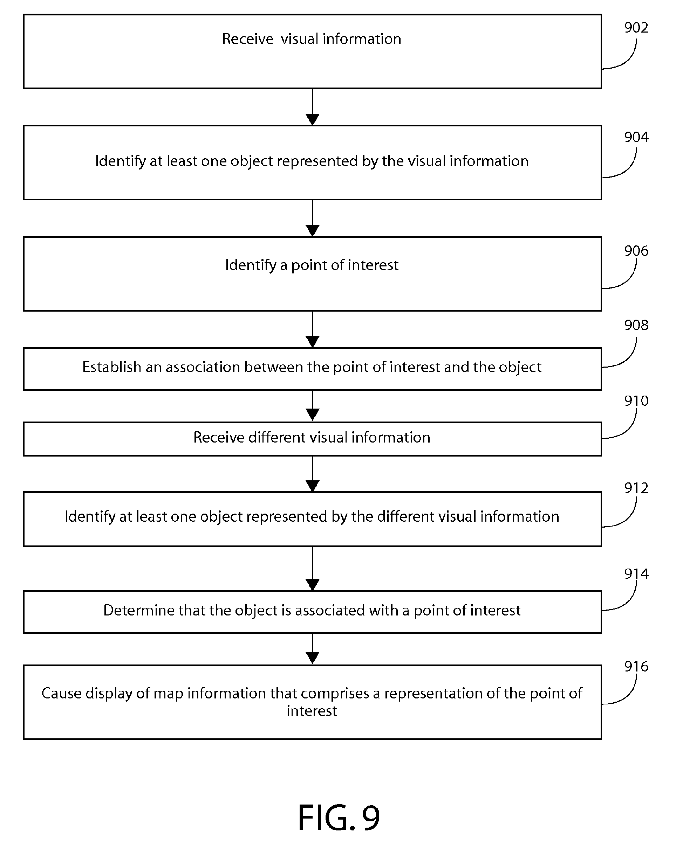

FIGURE 9 is a flow diagram illustrating activities associated with establishment of an association between a point of interest and an object according to at least one example embodiment. In at least one example embodiment, there is a set of operations that corresponds with the activities of FIGURE 9. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 9.

As previously described, it may be desirable to establish an association between a point of interest and an object.

At block 902, the apparatus receives visual information. The receipt and the visual information may be similar as described regarding FIGURE 3.

At block 904, the apparatus identifies at least one object represented by the visual information. The identification and the object may be similar as described regarding FIGURE 3.

At block 906, the apparatus identifies of a point of interest. The identification and the point of interest may be similar as described regarding FIGURES 2A-2C and FIGURES 4A-4B.

At block 908, the apparatus establishes an association between the point of interest and the object. The association may be similar as described regarding FIGURES 4A-4B.

At block 910, the apparatus receives different visual information. The receipt and the visual information may be similar as described regarding FIGURE 3.

At block 912, the apparatus identifies at least one object represented by the different visual information. The identification and the object may be similar as described regarding FIGURE 3.

At block 914, the apparatus determines that the object is associated with a point of interest, similarly as described regarding block 706 of FIGURE 7. At block 916, the apparatus causes display of map information that comprises a representation of the point of interest, similarly as described regarding block 708 of FIGURE 7.

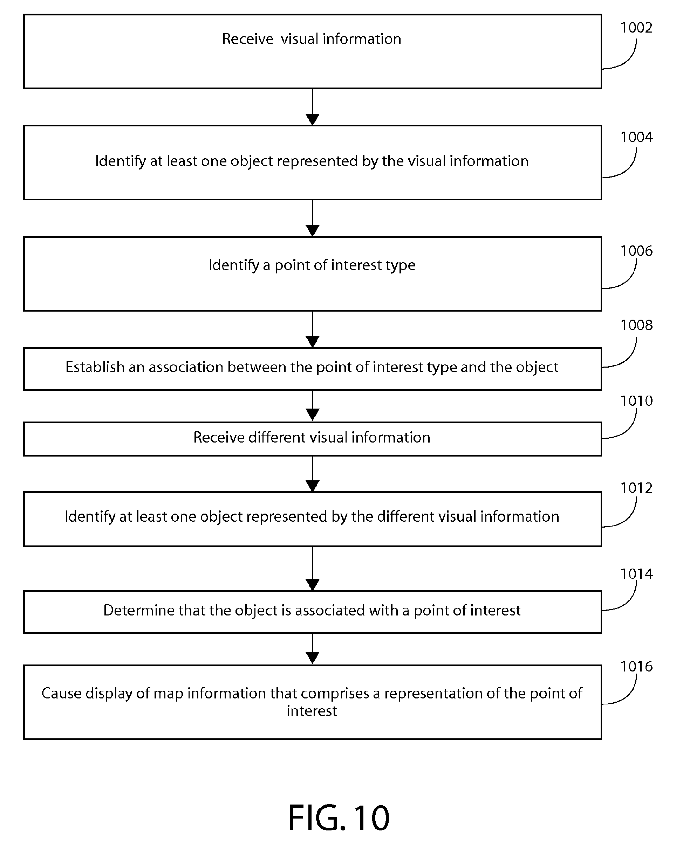

FIGURE 10 is a flow diagram illustrating activities associated with establishment of an association between a point of interest type and an object according to at least one example embodiment. In at least one example embodiment, there is a set of operations that corresponds with the activities of FIGURE 10. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 10.

As previously described, it may be desirable to establish an association between a point of interest type and an object.

At block 1002, the apparatus receives visual information, similarly as described regarding block 902 of FIGURE 9. At block 1004, the apparatus identifies at least one object represented by the visual information, similarly as described regarding block 904 of FIGURE 9.

At block 1006, the apparatus identifies a point of interest type. The identification and the point of interest type may be similar as described regarding FIGURES 2A-2C and FIGURES 4A-4B.

At block 1008, the apparatus establishes an association between the point of interest type and the object. The association may be similar as described regarding FIGURES 4A-4B.

At block 1010, the apparatus the apparatus receives different visual information, similarly as described regarding block 910 of FIGURE 9. At block 1012, the apparatus identifies at least one object represented by the different visual information, similarly as described regarding block 912 of FIGURE 9. At block 1014, the apparatus determines that the object is associated with a point of interest, similarly as described regarding block 706 of FIGURE 7. At block 1016, the apparatus causes display of map information that comprises a representation of the point of interest, similarly as described regarding block 708 of FIGURE 7.

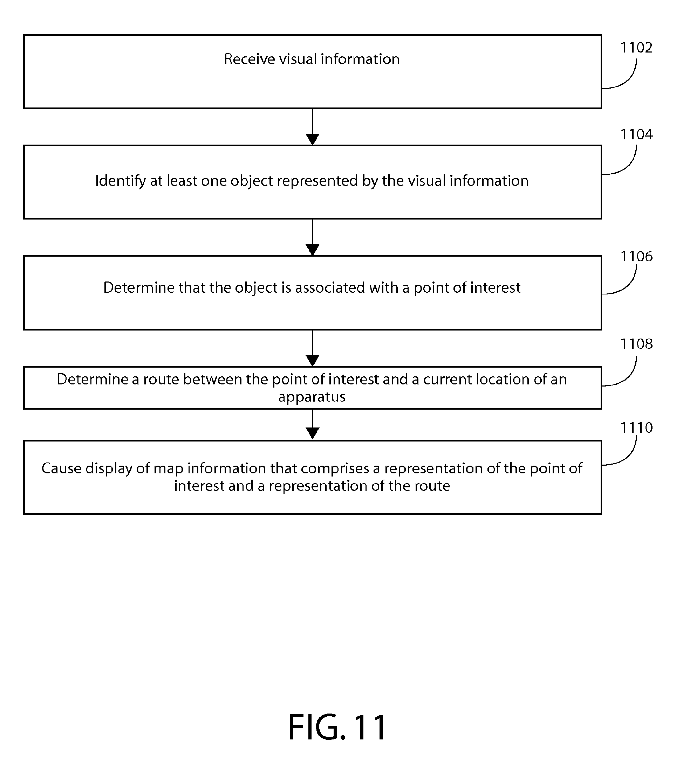

FIGURE 11 is a flow diagram illustrating activities associated with determining a route between a point of interest and a current location of an apparatus according to at least one example embodiment. In at least one example embodiment, there is a set of operations that corresponds with the activities of FIGURE 11. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 11.

As previously described, it may be desirable to determine a route between a point of interest and a current location of an apparatus.

At block 1102, the apparatus receives visual information, similarly as described regarding block 702 of FIGURE 7. At block 1104, the apparatus identifies at least one object represented by the visual information, similarly as described regarding block 704 of FIGURE 7. At block 1106, the apparatus determines that the object is associated with a point of interest, similarly as described regarding block 706 of FIGURE 7.

At block 1108, the apparatus determines a route between the point of interest and the current location of the apparatus. The determination, the route, and the current location may be similar as described regarding FIGURES 2A-2C and FIGURES 5A-5D.

At block 1110, the apparatus causes display of map information that comprises a representation of the point of interest and a representation of the route. The display, the representation of the point of interest, and the representation of the route may be similar as described regarding FIGURES 2A-2C and FIGURES 5A-5D.

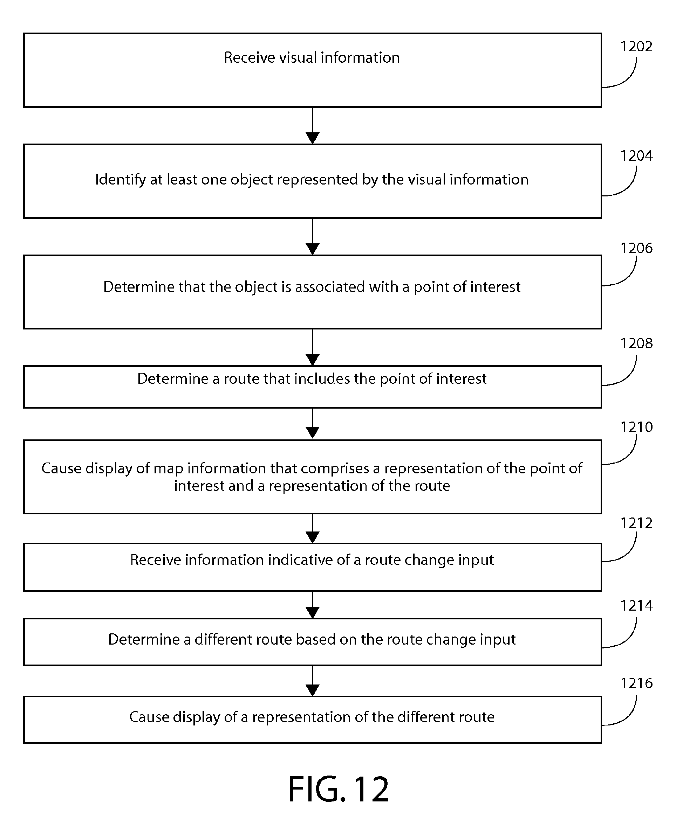

FIGURE 12 is a flow diagram illustrating activities associated with determining a route change according to at least one example embodiment. In at least one example embodiment, there is a set of operations that corresponds with the activities of FIGURE 12. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 12.

As previously described, it may be desirable to determine a different route based on a route change input.

At block 1202, the apparatus receives visual information, similarly as described regarding block 702 of FIGURE 7. At block 1204, the apparatus identifies at least one object represented by the visual information, similarly as described regarding block 704 of FIGURE 7. At block 1206, the apparatus determines that the object is associated with a point of interest, similarly as described regarding block 706 of FIGURE 7.

At block 1208, the apparatus determines a route that includes the point of interest. The determination and the route may be similar as described regarding FIGURES 2A-2C and FIGURES 5A-5D.

At block 1210, the apparatus causes display of map information that comprises a representation of the point of interest and a representation of the route, similarly as described regarding block 1110 of FIGURE 11.

At block 1212, the apparatus receives information indicative of a route change input. The receipt and the route change input may be similar as described regarding FIGURES 6A-6D.

At block 1214, the apparatus determines a different route based, at least in part, on the route change input. The determination and the route may be similar as described regarding FIGURES 6A-6D.

At block 1216, the apparatus causes display of a representation of the different route. The display and the representation of the different route may be similar as described regarding FIGURES 6A-6D.

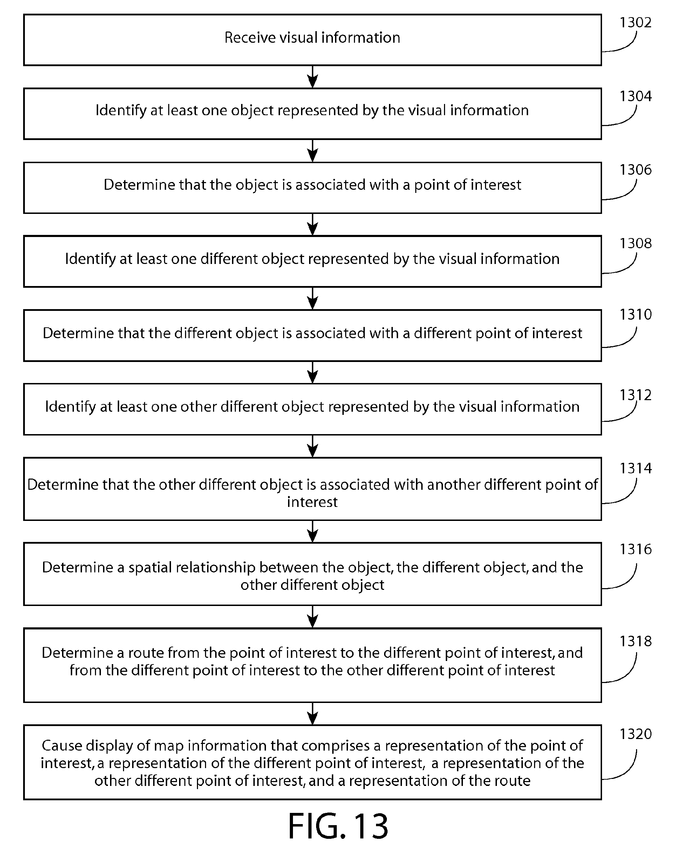

FIGURE 13 is a flow diagram illustrating activities associated with determining a spatial relationship between objects according to at least one example embodiment. In at least one example embodiment, there is a set of operations that corresponds with the activities of FIGURE 13. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 13.

As previously described, it may be desirable to determine a spatial relationship between an object, a different object, and another different object.

At block 1302, the apparatus receives visual information, similarly as described regarding block 702 of FIGURE 7. At block 1304, the apparatus identifies at least one object represented by the visual information, similarly as described regarding block 704 of FIGURE 7. At block 1306, the apparatus determines that the object is associated with a point of interest, similarly as described regarding block 706 of FIGURE 7.

At block 1308, the apparatus identifies at least one different object represented by the visual information. The identification and the different object may be similar as described regarding FIGURE 3 and FIGURES 5A-5D.

At block 1310, the apparatus determines that the different object is associated with a different point of interest. The determination, the association, and the different point of interest may be similar as described regarding FIGURES 4A-4B and FIGURES 5A-5D.

At block 1312, the apparatus identifies at least one other different object represented by the visual information. The identification and the other different object may be similar as described regarding FIGURE 3 and FIGURES 6A-6D.

At block 1314, the apparatus determines that the other different object is associated with another different point of interest. The determination, the association, and the other different point of interest may be similar as described regarding FIGURES 4A-4B and FIGURES 6A-6D.

At block 1316, the apparatus determines a spatial relationship between the object, the different object, and the other different object. The determination and the spatial relationship may be similar as described regarding FIGURES 6A-6D.

At block 1318, the apparatus determines a route from the point of interest to the different point of interest, and from the different point of interest to the other different point of interest. In this manner, the route may be based, at least in part, on the spatial relationship between the object, the different object, and the other different object. The determination and the route may be similar as described regarding FIGURES 6A-6D.

At block 1320, the apparatus causes display of map information that comprises a representation of the point of interest, a representation of the different point of interest, a representation of the other different point of interest, and a representation of the route. The representation of the point of interest, the representation of the different point of interest, the representation of the other different point of interest, and the representation of the route may be similar as described regarding FIGURES 2A-2C and FIGURES 6A-6D.

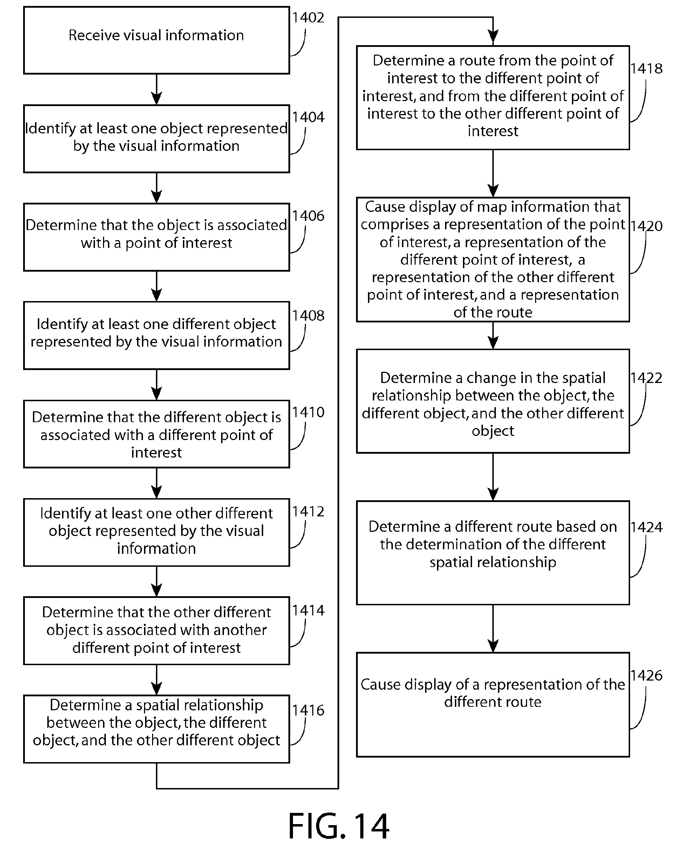

FIGURE 14 is a flow diagram illustrating activities associated with determining a different route based on a spatial relationship according to at least one example embodiment. In at least one example embodiment, there is a set of operations that corresponds with the activities of FIGURE 14. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 14.

As previously described, it may be desirable to determine a different route based on a change in the spatial relationship between an object, a different object, and another different object.

At block 1402, the apparatus receives visual information, similarly as described regarding block 702 of FIGURE 7. At block 1404, the apparatus identifies at least one object represented by the visual information, similarly as described regarding block 704 of FIGURE 7. At block 1406, the apparatus determines that the object is associated with a point of interest, similarly as described regarding block 706 of FIGURE 7. At block 1408, the apparatus identifies at least one different object represented by the visual information, similarly as described regarding block 1308 of FIGURE 13. At block 1410, the apparatus determines the different object is associated with a different point of interest, similarly as described regarding block 1310 of FIGURE 13. At block 1412, the apparatus identifies at least one other different object represented by the visual information, similarly as described regarding block 1312 of FIGURE 13. At block 1414, the apparatus determines that the other different object is associated with another different point of interest, similarly as described regarding block 1314 of FIGURE 13. At block 1416, the apparatus determines a spatial relationship between the object, the different object, and the other different object, similarly as described regarding block 1316 of FIGURE 13. At block 1418, the apparatus determines a route from the point of interest to the different point of interest, and from the different point of interest to the other different point of interest, similarly as described regarding block 1318 of FIGURE 13. At block 1420, the apparatus causes display of map information that comprises a representation of the point of interest, a representation of the different point of interest, a representation of the other different point of interest, and a representation of the route, similarly as described regarding block 1320 of FIGURE 13.

At block 1422, the apparatus determines a change in the spatial relationship between the object, the different object, and the other different object. The determination and the change may be similar as described regarding FIGURES 6A-6D.

At block 1424, the apparatus determines a different route based, at least in part, on the determination of the different spatial relationship. The determination and the different route may be similar as described regarding FIGURES 6A-6D.

At block 1426, the apparatus causes display of a representation of the different route. The display and the representation of the different route may be similar as described regarding FIGURES 6A-6D.

Embodiments of the invention may be implemented in software, hardware, application logic or a combination of software, hardware, and application logic. The software, application logic, and/or hardware may reside on the apparatus, a separate device, or a plurality of separate devices. If desired, part of the software, application logic, and/or hardware may reside on the apparatus, part of the software, application logic and/or hardware may reside on a separate device, and part of the software, application logic, and/or hardware may reside on a plurality of separate devices. In an example embodiment, the application logic, software or an instruction set is maintained on any one of various conventional computer-readable media.

If desired, the different functions discussed herein may be performed in a different order and/or concurrently with each other. For example, block 802 of FIGURE 8 may be performed after block 804 of FIGURE 8. Furthermore, if desired, one or more of the above-described functions may be optional or may be combined. For example, block 802 of FIGURE 8 may be optional and/or combined with block 804 of FIGURE 8.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are variations and modifications which may be made without departing from the scope of the present invention as defined in the appended claims.

## Claims

1. A method comprising:
receiving visual information;
identifying at least one object represented by the visual information;
determining that the object is associated with a point of interest, the object being absent an indication of the point of interest; and
causing display of map information that comprises a representation of the point of interest based, at least in part, on the determination that the object is associated with the point of interest.

2. The method of claim 1, further comprising:
receiving different visual information;
identifying at least one object represented by the different visual information;
identifying a point of interest; and
establishing an association between the point of interest and the object.

3. The method of any of claims 1-2, further comprising:
receiving different visual information;
identifying at least one object represented by the different visual information;
identifying of a point of interest type; and
establishing an association between the point of interest type and the object.

4. The method of any of claims 1-3, further comprising determining a route that includes the point of interest, wherein causation of display of the map information comprises a representation of the route.

5. The method of claim 4, wherein determination of the route comprises determination of a route between the point of interest and a current location of an apparatus.

6. The method of any of claims 4-5, further comprising:
receiving information indicative of a route change input;
determining a different route based, at least in part, on the route change input; and
causing display of a representation of the different route.

7. The method of any of claims 1-6, further comprising receiving information indicative of an association between the object and the point of interest, wherein the determination that the object is associated with the point of interest is based, at least in part, on the information indicative of an association between the object and the point of interest.

8. The method of any of claims 1-6, further comprising:
identifying at least one different object represented by the visual information; and
determining that the different object is associated with a different point of interest, the different object being absent an indication of the different point of interest, wherein causation of display of the map information comprises a representation of the different point of interest based, at least in part, on the determination that the different object is associated with the different point of interest.

9. The method of claim 8, further comprising determining a route that includes the point of interest and the different point of interest, wherein causation of display of the map information comprises a representation ofthe route.

10. The method of claim 9, further comprising determining a spatial relationship between the object and the different object, wherein the determination ofthe route is based, at least in part, on the spatial relationship.

11. The method of claim 10, further comprising:
identifying at least one other different object represented by the visual information; and
determining that the other different object is associated with another different point of interest, the other different object being absent an indication of the other different point of interest, wherein causation of display of the map information comprises a representation of the other different point of interest based, at least in part, on the determination that the other different object is associated with the other different point of interest, and determination of the spatial relationship between the object and the different object comprises determination of the spatial relationship between the object, the different object, and the other different object.

12. The method of claim 11, further comprising:
determining a change in the spatial relationship between the object, the different object, and the other different object;
determining a different route based, at least in part, on the determination of the different spatial relationship; and
causing display of a representation of the different route.

13. An apparatus comprising means for performing the method of any of the preceding claims.

14. The apparatus of Claim 13, wherein the means for performing the method comprise at least one processor and at least one memory, the memory comprising machine-readable instructions, that when executed cause the apparatus to perform the method of any of claims 1-12.

15. At least one computer readable medium comprising instructions that, when executed, perform the method of any of claims 1-12.
